# FASCICULE DE BREVET EUROPEEN

(11) **EP 3 999 385 B1**
(45) Date de publication et mention de la délivrance du brevet: **30.08.2023**
(21) Numéro de dépôt: 20750698.1
(22) Date de dépôt: 06.07.2020
(51) Int. Cl.: B60R 25/10, B60R 16/03, B60R 25/24

(54) **SÉCURISATION DES DÉMARRAGES D'UN VÉHICULE À DISPOSITIF D'ALERTE**
SICHERUNG DES STARTS EINES FAHRZEUGS MIT EINER WARNVORRICHTUNG
SECURING THE STARTING OF A VEHICLE WITH A WARNING DEVICE

(30) Priorité: 17.07.2019 FR 1908034
(43) Date de publication de la demande: 25.05.2022
(73) Titulaire: PSA Automobiles SA, 78300 Poissy (FR)
(72) Inventeur: BELLABAS, Alia, 78180 Montigny le Bretonneux (FR); MAIGNIEN, Christophe, 25150 Pont de Roide (FR); JAMPI, Didier, 92320 Chatillon (FR); COPIER, Nathalie, 25420 Courcelles les Montbeliard (FR)
(86) Numéro de dépôt international: PCT/FR2020/051195
(87) Numéro de publication internationale: WO 2021/009434

(56) Documents cités:
- EP-A2- 0 443 465
- WO-A2-99/06987
- CA-A1- 2 415 027
- FR-A1- 3 029 707
- US-A1- 2005 131 600

## Description

### Domaine technique de l'invention

L'invention concerne les dispositifs d'alerte équipant les véhicules, éventuellement de type automobile, et plus précisément la sécurisation des véhicules lorsque leurs dispositifs d'alerte ne peuvent pas fonctionner normalement.

### Etat de la technique

FR3 029 707 concerne un procède de sécurisation pour un véhicule comprenant un groupe motopropulseur démarrable, un module de communication émettant et recevant des messages par voie d'ondes, et un dispositif d'alerte générant, en cas d'activation, au moins un message d'alerte destiné a être transmis par ledit module de communication à au moins un équipement de communication prédéfini en cas de tentative d'attaque et/ou de vol dudit véhicule.

Comme le sait l'homme de l'art certains véhicules comprennent un dispositif d'alerte (parfois appelé traceur de véhicule volé (ou « stolen véhicule tracker »)) qui est chargé de générer, lorsqu'il est activé, au moins un message d'alerte destiné à être transmis par un module de communication embarqué à au moins un équipement de communication prédéfini en cas de tentative d'attaque et/ou de vol du véhicule. Chaque message d'alerte peut éventuellement comprendre la position géographique en cours du véhicule, laquelle est déterminée par le dispositif d'alerte ou par un dispositif de localisation équipant ce véhicule de façon permanente.

L'activation du dispositif d'alerte peut résulter, par exemple, du verrouillage des ouvrants du véhicule, ou de la réception d'un message d'activation, ou du retrait d'une clé (ou d'un boîtier) de démarrage (éventuellement électronique).

Afin d'optimiser les communications le module de communication comprend généralement une antenne (émettrice/réceptrice) extérieure, par exemple solidarisée fixement à la face externe d'une partie de la carrosserie. Le dispositif d'alerte est souvent installé dans un endroit secret du véhicule ou bien dans le pied de l'antenne, notamment lorsque ce dernier loge une carte électronique contrôlant les émissions/réceptions.

Un inconvénient de ce type de dispositif d'alerte réside dans le fait qu'il n'est d'aucune utilité lorsque ses messages d'alerte ne sont pas émis, alors même qu'il a été activé. C'est notamment le cas lorsque le dispositif d'alerte et/ou l'antenne fait/font l'objet d'une panne ou d'un dysfonctionnement, ou bien d'un arrachement ou endommagement résultant d'un acte malveillant réalisé pendant une tentative de vol du véhicule.

L'invention a donc notamment pour but d'améliorer la situation.

### Présentation de l'invention

Elle propose notamment à cet effet un procédé de sécurisation destiné à être mis en oeuvre dans un véhicule comprenant un groupe motopropulseur démarrable, un module de communication émettant et recevant des messages par voie d'ondes, et un dispositif d'alerte générant, en cas d'activation, au moins un message d'alerte destiné à être transmis par le module de communication à au moins un équipement de communication prédéfini en cas de tentative d'attaque et/ou de vol du véhicule.

Ce procédé de sécurisation se caractérise par le fait qu'il comprend une étape dans laquelle, en cas de tentative de démarrage du groupe motopropulseur alors que le dispositif d'alerte est activé, on détermine si le message d'alerte a pu être transmis, et dans la négative on interdit le démarrage.

Grâce à l'invention, on peut désormais déterminer si le message d'alerte a ou n'a pas pu être transmis, et s'il a pu être transmis on autorise le démarrage du véhicule car l'équipement de communication a été alerté, tandis que s'il n'a pas pu être transmis, l'équipement de communication n'a pas été alerté et donc on interdit le démarrage du véhicule.

Le procédé de sécurisation selon l'invention peut comporter d'autres caractéristiques qui peuvent être prises séparément ou en combinaison, et notamment :
- dans son étape on peut adresser des messages dédiés au module de communication et/ou au dispositif d'alerte, et en l'absence de réponse à l'un au moins de ces messages on considère que le message d'alerte n'a pas pu être transmis ;
- dans son étape, lorsque le véhicule comprend un réseau de communication auquel sont connectés le module de communication et le dispositif d'alerte, on peut adresser les messages dédiés via le réseau de communication au module de communication et/ou au dispositif d'alerte, et on peut attendre une transmission des réponses via le réseau de communication ;
- dans son étape on peut interdire le démarrage lorsque l'on ne reçoit pas de réponse du module de communication et/ou du dispositif d'alerte pendant une première durée choisie ;
- dans son étape la première durée peut être comprise entre une minute et trois minutes ;
- dans son étape on peut interdire le démarrage pendant une seconde durée choisie ;
- dans son étape la seconde durée peut se terminer lorsque l'on désactive le dispositif d'alerte.

L'invention propose également un produit programme d'ordinateur comprenant un jeu d'instructions qui, lorsqu'il est exécuté par des moyens de traitement, est propre à mettre en oeuvre un procédé de sécurisation du type de celui présenté ci-avant pour sécuriser les démarrages d'un véhicule comprenant un groupe motopropulseur démarrable, un dispositif de localisation déterminant sa position géographique, un module de communication émettant et recevant des messages par voie d'ondes, et un dispositif d'alerte générant, en cas d'activation, au moins un message d'alerte destiné à être transmis par le module de communication à au moins un équipement de communication prédéfini en cas de tentative d'attaque et/ou de vol du véhicule.

L'invention propose également un dispositif de sécurisation destiné à équiper un véhicule comprenant un groupe motopropulseur démarrable, un dispositif de localisation déterminant sa position géographique, un module de communication émettant et recevant des messages par voie d'ondes, et un dispositif d'alerte générant, en cas d'activation, au moins un message d'alerte destiné à être transmis par le module de communication à au moins un équipement de communication prédéfini en cas de tentative d'attaque et/ou de vol du véhicule.

Ce dispositif de sécurisation se caractérise par le fait qu'il comprend au moins un processeur et au moins une mémoire agencés pour effectuer les opérations consistant, en cas de tentative de démarrage du groupe motopropulseur alors que le dispositif d'alerte est activé, à déterminer si le message d'alerte a pu être transmis, et dans la négative à interdire le démarrage.

L'invention propose également un véhicule, éventuellement de type automobile, et comprenant, d'une part, un groupe motopropulseur démarrable, un dispositif de localisation déterminant sa position géographique, un module de communication émettant et recevant des messages par voie d'ondes, et un dispositif d'alerte générant, en cas d'activation, au moins un message d'alerte destiné à être transmis par le module de communication à au moins un équipement de communication prédéfini en cas de tentative d'attaque et/ou de vol du véhicule, et, d'autre part, un dispositif de sécurisation du type de celui présenté ci-avant.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement un véhicule comprenant un dispositif d'alerte, un dispositif de sécurisation selon l'invention, et un module de communication couplé à un réseau de communication auquel est aussi couplé un équipement de communication,
[Fig. 2] illustre schématiquement un exemple d'algorithme mettant en oeuvre un procédé de sécurisation selon l'invention, et
[Fig. 3] illustre schématiquement et fonctionnellement un exemple de réalisation d'un dispositif de sécurisation mettant en oeuvre un procédé de sécurisation selon l'invention.

### Description détaillée de l'invention

L'invention a notamment pour but de proposer un procédé de sécurisation, et un dispositif de sécurisation DS associé, destinés à sécuriser le démarrage d'un véhicule V comprenant un groupe motopropulseur GM démarrable et un dispositif d'alerte DA.

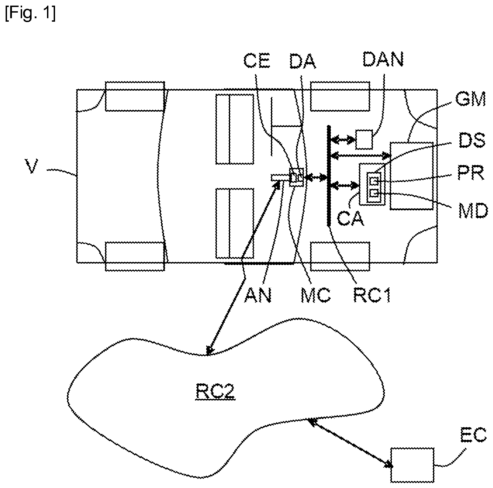

Dans ce qui suit, on considère, à titre d'exemple non limitatif, que le véhicule V est de type automobile. Il s'agit par exemple d'une voiture, comme illustré non limitativement sur la figure 1. Mais l'invention n'est pas limitée à ce type de véhicule. Elle concerne en effet tout type de véhicule comprenant un dispositif d'alerte DA. Par conséquent, l'invention concerne les véhicules terrestres, les bateaux, et les aéronefs.

On a schématiquement représenté sur la figure 1 un exemple de véhicule V (ici automobile) comprenant notamment un groupe motopropulseur (ou GMP) GM, un dispositif d'alerte DA, un dispositif de sécurisation DS selon l'invention, et un module de communication MC, pouvant communiquer par voie d'ondes avec un réseau de communication RC2, au moins partiellement non filaire et auquel est également couplé un équipement de communication EC.

Le groupe motopropulseur (ou GMP) GM est démarrable (par contrôle électronique) et comprend au moins une machine motrice agencée de manière à fournir ou récupérer du couple pour déplacer le véhicule V. Cette (chaque) machine motrice peut être thermique ou non-thermique. Une machine motrice non-thermique peut, par exemple, être une machine (ou un moteur) électrique, une machine hydraulique, une machine pneumatique (ou à air comprimé), ou un volant d'inertie. Une machine motrice thermique peut, par exemple, être un moteur thermique.

Le module de communication MC est agencé de manière à émettre/recevoir par voie d'ondes des messages, ainsi qu'éventuellement des programmes audio et/ou vidéo, vers le/du réseau de communication RC2 ainsi qu'éventuellement vers des/d'autres modules de communication. Ces autres modules de communication peuvent appartenir à d'autres véhicules ou bien à des serveurs ou des stations communicantes d'une infrastructure. Par conséquent, les communications peuvent se faire à courte distance, par exemple selon le standard WiFi ou LiFi, ou à plus longue distance, par exemple au moyen d'un standard de téléphonie mobile (en particulier 4G ou 5G). On notera qu'il peut aussi, éventuellement, réaliser du Car2X, CAR 2 CAR ou Infra2Car avec la technologie WiFi-G5 ou cellulaire (4G ou 5G).

Par exemple, et comme illustré non limitativement sur la figure 1, le module de communication MC peut comprendre une antenne AN extérieure et une carte électronique CE contrôlant les émissions/réceptions de l'antenne AN. Dans une voiture V l'antenne AN peut, par exemple, être solidarisée fixement à une partie externe de la carrosserie, et notamment à la face externe du toit (ou pavillon) comme illustré non limitativement sur la figure 1. La carte électronique CE peut, par exemple et comme illustré non limitativement sur la figure 1, être logée dans le pied de l'antenne AN, mais cela n'est pas obligatoire. En effet, elle pourrait être logée dans un boîtier, par exemple solidarisé à la face interne du toit (ou pavillon) du véhicule V (éventuellement en dessous de l'antenne AN), ou dans le compartiment moteur du véhicule V.

Le dispositif d'alerte DA est agencé de manière à générer, lorsqu'il a été activé, au moins un message d'alerte qui est destiné à être transmis par le module de communication MC à au moins un équipement de communication EC prédéfini en cas de tentative d'attaque et/ou de vol du véhicule V.

Cet équipement de communication EC peut, par exemple, être un serveur appartenant au fabricant du dispositif d'alerte DA ou du véhicule V.

On notera que le message d'alerte peut contenir des données définissant le problème dont fait l'objet le véhicule V, comme par exemple une tentative d'attaque (ou d'effraction) ou de vol, et/ou des données définissant la position géographique en cours du véhicule V. Cette position géographique peut être déterminée par le dispositif d'alerte DA ou par un dispositif d'aide à la navigation DAN équipant le véhicule V de façon permanente, comme illustré non limitativement sur la figure 1.

L'activation du dispositif d'alerte DA peut résulter, par exemple, du verrouillage des ouvrants du véhicule V, ou de la réception d'un message d'activation (par une télécommande ou par le module de communication MC qui l'a reçu du réseau de communication RC2), ou du retrait de la clé (ou du boîtier) de démarrage (éventuellement électronique). La désactivation du dispositif d'alerte DA peut résulter, par exemple, du déverrouillage des ouvrants du véhicule V, ou de la réception d'un message de désactivation (par une télécommande ou par le module de communication MC qui l'a reçu du réseau de communication RC2), ou de l'insertion de la clé (ou du boîtier) de démarrage (éventuellement électronique).

Comme évoqué plus haut, l'invention propose notamment un procédé de sécurisation destiné à sécuriser le démarrage du véhicule V, et plus précisément de son groupe motopropulseur GM.

Ce procédé de sécurisation peut être mis en oeuvre (au moins partiellement) par le dispositif de sécurisation DS qui comprend à cet effet au moins un processeur PR, par exemple de signal numérique (ou DSP (« Digital Signal Processor »)), et au moins une mémoire MD, et donc qui peut être réalisé sous la forme d'une combinaison de circuits ou composants électriques ou électroniques (ou « hardware ») et de modules logiciels (ou « software »). La mémoire MD est vive afin de stocker des instructions pour la mise en oeuvre par le processeur PR d'une partie au moins du procédé de sécurisation. Le processeur PR peut comprendre des circuits intégrés (ou imprimés), ou bien plusieurs circuits intégrés (ou imprimés) reliés par des connections filaires ou non filaires. On entend par circuit intégré (ou imprimé) tout type de dispositif apte à effectuer au moins une opération électrique ou électronique.

Dans l'exemple illustré non limitativement sur la figure 1, le dispositif de sécurisation DS fait partie d'un calculateur CA équipant le véhicule V. Mais cela n'est pas obligatoire. En effet, le dispositif de sécurisation DS pourrait être un équipement comprenant son propre calculateur. D'une manière générale, ce dispositif de sécurisation DS est préférentiellement installé dans une zone secrète, compte tenu de son importance en termes de sécurisation du véhicule V.

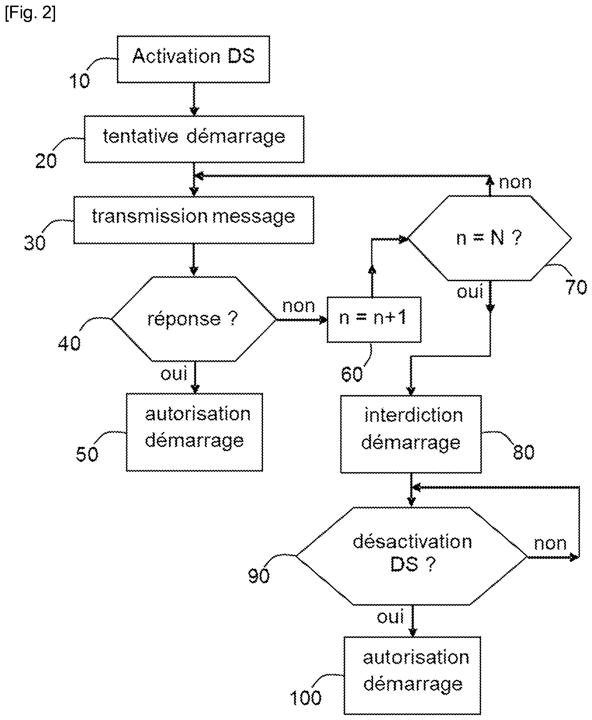

Comme illustré non limitativement sur la figure 2, le procédé de sécurisation, selon l'invention, comprend une étape 10-100 qui débute dans une sous-étape 10 lorsque le dispositif d'alerte DA a été activé.

Dans cette étape 10-100 du procédé (de sécurisation), en cas de tentative de démarrage du groupe motopropulseur GM dans une sous-étape 20 alors que le dispositif d'alerte DA est activé, on (le dispositif de sécurisation DS) détermine dans des sous-étapes 30, 40, 60 et 70 si le message d'alerte (généré par le dispositif d'alerte DA) a pu être transmis par le module de communication MC (et plus précisément par l'antenne AN).

Dans l'affirmative (et donc si le message d'alerte a pu être transmis), on (le dispositif de sécurisation DS) autorise le démarrage du groupe motopropulseur GM dans une sous-étape 50.

En revanche, dans la négative (et donc si le message d'alerte n'a pas pu être transmis), on (le dispositif de sécurisation DS) interdit le démarrage du groupe motopropulseur GM dans une sous-étape 80.

On comprendra que si l'on tente de démarrer le véhicule V alors que son dispositif d'alerte DA a été activé, c'est que ce véhicule V fait l'objet d'une tentative d'attaque et/ou de vol qui est détectée par le dispositif d'alerte DA, lequel génère alors un message d'alerte devant être transmis par le module de communication MC à l'équipement de communication EC. Par conséquent, dans cette situation l'invention permet de déterminer si le message d'alerte a ou n'a pas pu être transmis. S'il a pu être transmis, on peut autoriser le démarrage du véhicule V car l'équipement de communication EC a été alerté, et donc le véhicule V peut éventuellement être suivi (ou tracé) grâce à la fourniture de ses positions géographiques successives par le dispositif d'alerte DA. S'il n'a pas pu être transmis, l'équipement de communication EC n'a donc pas été alerté, et donc on interdit le démarrage du véhicule V.

On notera que lorsque le dispositif d'alerte DA fait partie de l'antenne AN (et donc du module de communication MC) on peut transmettre le message dédié seulement au dispositif d'alerte DA ou seulement au module de communication MC, car si l'un est endommagé ou arraché, l'autre est aussi endommagé ou arraché. En revanche, lorsque le dispositif d'alerte DA ne fait pas partie du module de communication MC, on doit transmettre des messages dédiés au dispositif d'alerte DA et au module de communication MC, car l'un d'entre eux peut être endommagé ou arraché (généralement c'est l'antenne AN qui est visée) quand l'autre est intact car caché ou inaccessible de l'extérieur.

Par exemple, pour déterminer si le message d'alerte a pu être transmis, on peut procéder comme suit, de façon non limitative.

Dans cet exemple, illustré non limitativement sur la figure 2, dans l'étape 10-100 on (le dispositif de sécurisation DS) peut adresser (ou transmettre) des messages dédiés au module de communication MC et/ou au dispositif d'alerte DA dans une sous-étape 30, auxquels il(s) doi(ven)t répondre. Puis, dans une sous-étape 40 on (le dispositif de sécurisation DS) peut déterminer si des réponses ont été effectivement transmises. En l'absence de réponse à l'un au moins des messages dédiés on considère que le message d'alerte n'a pas pu être transmis. En effet, on considère que le module de communication MC et/ou le dispositif d'alerte DA n'est (ne sont) pas joignable(s) et donc qu'il(s) est (sont) endommagé(s) ou absent(s). En revanche, en présence de réponse à l'un au moins des messages dédiés (ou aux messages dédiés lorsque les deux (MC et DA) sont interrogés), on considère que le message d'alerte a pu être transmis. En effet, on considère que le module de communication MC et/ou le dispositif d'alerte DA est (sont) joignable(s) et donc fonctionne(nt) correctement.

En présence de la dernière option, dans l'étape 10-100, lorsque le véhicule V comprend un réseau de communication RC1 auquel sont connectés le module de communication MC et le dispositif d'alerte DA, comme illustré non limitativement sur la figure 1, on (le dispositif de sécurisation DS) peut adresser les messages dédiés via ce réseau de communication RC1 au module de communication MC et/ou au dispositif d'alerte DA. Dans ce cas, on (le dispositif de sécurisation DS) attend une transmission des réponses aux messages dédiés via le réseau de communication RC1 du véhicule V. On comprendra que cette option nécessite que le dispositif de sécurisation DS soit aussi couplé au réseau de communication RC1 directement ou indirectement (par exemple ici via le calculateur CA).

Le réseau de communication RC1 équipant le véhicule V peut être multiplexé. Dans ce cas, il peut, par exemple, s'agir d'un réseau CAN (« Controller Area Network ») ou LIN (« Local Interconnect Network »)).

Mais on notera que les transmissions des messages dédiés et des réponses à ces derniers pourraient se faire par voie d'ondes, par exemple en WiFi ou Bluetooth.

Ain d'éviter de tenir compte d'une erreur de transmission d'un message dédié ou d'une réponse, on peut transmettre N fois les messages dédiés, avec N ≥ 2. Par exemple, on peut choisir N égal à trois. Dans ce cas, comme illustré non limitativement sur la figure 2, lorsque le dispositif de sécurisation DS apprend dans la sous-étape 40 qu'il n'a pas reçu au moins une réponse à un message dédié qu'il vient de transmettre, il peut dans une sous-étape 60 incrémenter d'une unité la valeur en cours d'une variable n (représentative du nombre de transmissions effectuées et donc prenant des valeurs de 1 à N), soit n = n+1. Puis, dans une sous-étape 70 le dispositif de sécurisation DS peut déterminer si la valeur en cours de la variable n est égale à N. Dans la négative (« non »), le dispositif de sécurisation DS retourne effectuer la sous-étape 30 pour transmettre au moins un nouveau message dédié. En revanche, dans l'affirmative (« oui »), le dispositif de sécurisation DS effectue la sous-étape 80 dans laquelle il interdit le démarrage du groupe motopropulseur GM.

On notera également qu'en variante dans l'étape 10-100 on (le dispositif de sécurisation DS) peut interdire le démarrage lorsque l'on (lorsqu'il) ne reçoit pas de réponse du module de communication MC et/ou du dispositif d'alerte DA pendant une première durée d1 choisie.

Par exemple, cette première durée d1 peut être comprise entre une minute et trois minutes. Ainsi, elle peut, par exemple, être choisie égale à deux minutes.

On notera également que dans l'étape 10-100 on (le dispositif de sécurisation DS) peut interdire le démarrage pendant une seconde durée d2 choisie.

En présence de cette dernière option, la seconde durée d2 peut, par exemple, se terminer lorsque l'on désactive le dispositif d'alerte DA. Dans ce cas, comme illustré non limitativement sur la figure 2, le dispositif de sécurisation DS peut, après avoir interdit le démarrage, effectuer une sous-étape 90 dans laquelle il détermine si le dispositif d'alerte DA a été désactivé. Dans la négative (« non »), le dispositif de sécurisation DS retourne effectuer la sous-étape 90 quelques instants plus tard (par exemple cinq ou dix minutes après). En revanche, dans l'affirmative (« oui »), le dispositif de sécurisation DS effectue la sous-étape 100 dans laquelle il autorise le démarrage du groupe motopropulseur GM.

On notera également que l'invention propose aussi un produit programme d'ordinateur (ou programme informatique) comprenant un jeu d'instructions qui, lorsqu'il est exécuté par des moyens de traitement de type circuits électroniques (ou hardware), comme par exemple le processeur PR, est propre à mettre en oeuvre le procédé de sécurisation décrit ci-avant pour sécuriser les démarrages du véhicule V.

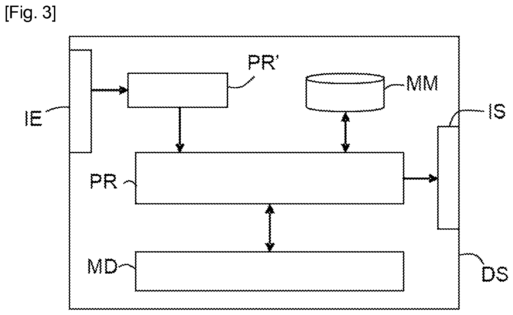

On notera également, comme illustré non limitativement sur la figure 3, que le dispositif de sécurisation DS peut aussi comprendre, en complément de sa mémoire vive MD et de son processeur PR, une mémoire de masse MM, notamment pour le stockage des réponses à ses messages dédiés, de la valeur en cours de l'éventuelle variable n, du signalement d'une activation ou désactivation du dispositif d'alerte DA, du signalement d'une tentative de démarrage du groupe motopropulseur GM, et de données intermédiaires intervenant dans tous ses calculs et traitements. Par ailleurs, ce dispositif de sécurisation DS peut aussi comprendre une interface d'entrée IE pour la réception d'au moins les réponses à ses messages dédiés, le signalement d'une activation ou désactivation du dispositif d'alerte DA et le signalement d'une tentative de démarrage du groupe motopropulseur GM, pour les utiliser dans des calculs ou traitements, éventuellement après les avoir mis en forme et/ou démodulés et/ou amplifiés, de façon connue en soi, au moyen d'un processeur de signal numérique PR'. De plus, ce dispositif de sécurisation DS peut aussi comprendre une interface de sortie IS, notamment pour délivrer ses messages dédiées et ses autorisations de démarrage et interdictions de démarrage.

On notera également qu'une ou plusieurs sous-étapes de l'étape du procédé de sécurisation peuvent être effectuées par des composants différents. Ainsi, le procédé de sécurisation peut-être mis en oeuvre par une pluralité de processeurs de signal numérique, mémoire vive, mémoire de masse, interface d'entrée, interface de sortie.

## Revendications

1. Procédé de sécurisation pour un véhicule (V) comprenant un groupe motopropulseur (GM) démarrable, un module de communication (MC) émettant et recevant des messages par voie d'ondes, et un dispositif d'alerte (DA) générant, en cas d'activation, au moins un message d'alerte destiné à être transmis par ledit module de communication (MC) à au moins un équipement de communication prédéfini en cas de tentative d'attaque et/ou de vol dudit véhicule (V), **caractérisé en ce qu'**il comprend une étape (10-100) dans laquelle, en cas de tentative de démarrage dudit groupe motopropulseur (GM) alors que ledit dispositif d'alerte (DA) est activé, on détermine si ledit message d'alerte a pu être transmis, et dans la négative on interdit ledit démarrage.

2. Procédé selon la revendication 1, **caractérisé en ce que** dans ladite étape (10-100) on adresse des messages dédiés audit module de communication (MC) et/ou audit dispositif d'alerte (DA), et en l'absence de réponse à l'un au moins de ces messages on considère que ledit message d'alerte n'a pas pu être transmis.

3. Procédé selon la revendication 2, **caractérisé en ce que** dans ladite étape (10-100), lorsque ledit véhicule (V) comprend un réseau de communication (RC1) auquel sont connectés ledit module de communication (MC) et ledit dispositif d'alerte (DA), on adresse lesdits messages dédiés via ledit réseau de communication (RC1) audit module de communication (MC) et/ou audit dispositif d'alerte (DA), et on attend une transmission des réponses via ledit réseau de communication (RC1).

4. Procédé selon la revendication 2 ou 3, **caractérisé en ce que** dans ladite étape (10-100) on interdit ledit démarrage lorsque l'on ne reçoit pas de réponse dudit module de communication (MC) et/ou dudit dispositif d'alerte (DA) pendant une première durée choisie.

5. Procédé selon la revendication 4, **caractérisé en ce que** dans ladite étape (10-100) ladite première durée est comprise entre une minute et trois minutes.

6. Procédé selon l'une des revendications 1 à 5, **caractérisé en ce que** dans ladite étape (10-100) on interdit ledit démarrage pendant une seconde durée choisie.

7. Procédé selon la revendication 6, **caractérisé en ce que** dans ladite étape (10-100) ladite seconde durée se termine lorsque l'on désactive ledit dispositif d'alerte (DA).

8. Produit programme d'ordinateur comprenant un jeu d'instructions qui, lorsqu'il est exécuté par des moyens de traitement, est propre à mettre en oeuvre le procédé de sécurisation selon l'une des revendications précédentes pour sécuriser les démarrages d'un véhicule (V) comprenant un groupe motopropulseur (GM) démarrable, un module de communication (MC) émettant et recevant des messages par voie d'ondes, et un dispositif d'alerte (DA) générant, en cas d'activation, au moins un message d'alerte destiné à être transmis par ledit module de communication (MC) à au moins un équipement de communication prédéfini en cas de tentative d'attaque et/ou de vol dudit véhicule (V).

9. Dispositif de sécurisation (DS) pour un véhicule (V) comprenant un groupe motopropulseur (GM) démarrable, un module de communication (MC) émettant et recevant des messages par voie d'ondes, et un dispositif d'alerte (DA) générant, en cas d'activation, au moins un message d'alerte destiné à être transmis par ledit module de communication (MC) à au moins un équipement de communication prédéfini en cas de tentative d'attaque et/ou de vol dudit véhicule (V), **caractérisé en ce qu'**il comprend au moins un processeur (PR) et au moins une mémoire (MD) agencés pour effectuer les opérations consistant, en cas de tentative de démarrage dudit groupe motopropulseur (GM) alors que ledit dispositif d'alerte (DA) est activé, à déterminer si ledit message d'alerte a pu être transmis, et dans la négative à interdire ledit démarrage.

10. Véhicule (V) comprenant un groupe motopropulseur (GM) démarrable, un module de communication (MC) émettant et recevant des messages par voie d'ondes, et un dispositif d'alerte (DA) générant, en cas d'activation, au moins un message d'alerte destiné à être transmis par ledit module de communication (MC) à au moins un équipement de communication prédéfini en cas de tentative d'attaque et/ou de vol dudit véhicule (V), **caractérisé en ce qu'**il comprend en outre un dispositif de sécurisation (DS) selon la revendication 9.

## Patentansprüche

1. Sicherungsverfahren für ein Fahrzeug (V) mit einem startbaren Antriebsstrang (GM), einem Kommunikationsmodul (MC), das Nachrichten über Wellen sendet und empfängt, und einer Warnvorrichtung (DA), die bei Aktivierung mindestens eine Warnmeldung erzeugt, die dazu bestimmt ist, von dem Kommunikationsmodul (MC) im Falle eines versuchten Angriffs und/oder Diebstahls des Fahrzeugs (V) an mindestens eine vordefinierte Kommunikationseinrichtung übertragen zu werden, **dadurch gekennzeichnet, dass** es einen Schritt (10-100) umfasst, in dem im Falle eines Startversuchs des Antriebsstrangs (GM), während die Warnvorrichtung (DA) aktiviert ist, festgestellt wird, ob die Warnmeldung übertragen werden konnte, und wenn nicht, das Starten unterbunden wird.

2. Verfahren nach Anspruch 1, **dadurch gekennzeichnet, dass** in dem Schritt (10-100) Nachrichten an das Kommunikationsmodul (MC) und/oder die Warnvorrichtung (DA) gerichtet werden, und bei Ausbleiben einer Antwort auf mindestens eine dieser Nachrichten davon ausgegangen wird, dass die Warnnachricht nicht übertragen werden konnte.

3. Verfahren nach Anspruch 2, **dadurch gekennzeichnet, dass** in dem Schritt (10-100), wenn das Fahrzeug (V) ein Kommunikationsnetz (RC1) umfasst, mit dem das Kommunikationsmodul (MC) und die Warnvorrichtung (DA) verbunden sind, die dedizierten Nachrichten über das Kommunikationsnetz (RC1) an das Kommunikationsmodul (MC) und/oder die Warnvorrichtung (DA) gesendet werden und auf eine Übertragung der Antworten über das Kommunikationsnetz (RC1) gewartet wird.

4. Verfahren nach Anspruch 2 oder 3, **dadurch gekennzeichnet, dass** in dem Schritt (10-100) das Starten verboten wird, wenn während einer ersten gewählten Dauer keine Antwort von dem Kommunikationsmodul (MC) und/oder der Warnvorrichtung (DA) empfangen wird.

5. Verfahren nach Anspruch 4, **dadurch gekennzeichnet, dass** in dem Schritt (10-100) die erste Dauer zwischen einer Minute und drei Minuten liegt.

6. Verfahren nach einem der Ansprüche 1 bis 5, **dadurch gekennzeichnet, dass** in dem Schritt (10-100) das Starten für eine zweite ausgewählte Dauer verboten wird.

7. Verfahren nach Anspruch 6, **dadurch gekennzeichnet, dass** in dem Schritt (10-100) die zweite Dauer endet, wenn die Warnvorrichtung (DA) deaktiviert wird.

8. Computerprogrammprodukt mit einem Befehlssatz, der, wenn er von Verarbeitungsmitteln ausgeführt wird, geeignet ist, das Sicherungsverfahren nach einem der vorhergehenden Ansprüche umzusetzen, um die Starts eines Fahrzeugs (V) zu sichern, das einen startbaren Antriebsstrang (GM) umfasst, ein Kommunikationsmodul (MC), das Nachrichten über einen Wellenweg sendet und empfängt, und eine Warnvorrichtung (DA), die bei Aktivierung mindestens eine Warnnachricht erzeugt, die dazu bestimmt ist, von dem Kommunikationsmodul (MC) an mindestens eine vordefinierte Kommunikationseinrichtung übertragen zu werden, wenn ein Angriffs- und/oder Diebstahlversuch des Fahrzeugs (V) vorliegt.

9. Sicherungsvorrichtung (DS) für ein Fahrzeug (V) mit einem startbaren Antriebsstrang (GM), einem Kommunikationsmodul (MC), das Nachrichten über Wellen sendet und empfängt, und einer Warnvorrichtung (DA), die bei Aktivierung mindestens eine Warnmeldung erzeugt, die dazu bestimmt ist, von dem Kommunikationsmodul (MC) im Falle eines versuchten Angriffs und/oder Diebstahls des Fahrzeugs (V) an mindestens eine vordefinierte Kommunikationsausrüstung übertragen zu werden, **dadurch gekennzeichnet, dass** sie mindestens einen Prozessor (PR) und mindestens einen Speicher (MD) umfasst, die so beschaffen sind, dass sie im Falle eines Startversuchs des Antriebsstrangs (GM), während die Warnvorrichtung (DA) aktiviert ist, die Operationen durchführen, die darin bestehen, festzustellen, ob die Warnmeldung übertragen werden konnte, und, falls nicht, das Starten zu verbieten.

10. Fahrzeug (V) mit einem startbaren Antriebsstrang (GM), einem Kommunikationsmodul (MC), das Nachrichten über Wellen sendet und empfängt, und einer Warnvorrichtung (DA), die bei Aktivierung mindestens eine Warnmeldung erzeugt, die dazu bestimmt ist, von dem Kommunikationsmodul (MC) im Falle eines versuchten Angriffs und/oder Diebstahls des Fahrzeugs (V) an mindestens eine vordefinierte Kommunikationseinrichtung übermittelt zu werden, **dadurch gekennzeichnet, dass** es außerdem eine Sicherungsvorrichtung (DS) nach Anspruch 9 umfasst.

## Claims

1. Security method for a vehicle (V) comprising a startable powertrain (GM), a communication module (MC) transmitting and receiving messages by way of waves, and an alert device (DA) generating, in the event of activation, at least one alert message intended to be transmitted by the said communication module (MC) to at least one predefined piece of communication equipment in the event of an attempted attack on and/or theft of the said vehicle (V), **characterised in that** it comprises a step (10-100) in which, in the event of an attempt to start said powertrain (GM) while said warning device (DA) is activated, it is determined whether said warning message may have been transmitted, and if not, said starting is prevented.

2. Method according to claim 1, **characterised in that** in the said step (10-100) dedicated messages are sent to the said communication module (MC) and/or to the said warning device (DA), and in the absence of a response to at least one of these messages it is considered that the said warning message could not be transmitted.

3. Method according to claim 2, **characterised in that** in the said step (10-100), when the said vehicle (V) comprises a communication network (RC1) to which the said communication module (MC) and the said alert device (DA) are connected, the said dedicated messages are sent via the said communication network (RC1) to the said communication module (MC) and/or to the said alert device (DA), and transmission of the responses via the said communication network (RC1) is awaited.

4. Method according to claim 2 or 3, **characterised in that** in said step (10-100) said start-up is prohibited when no response is received from said communication module (MC) and/or said alert device (DA) for a first selected duration.

5. Method as claimed in claim 4, **characterised in that** in said step (10-100) said first duration is between one minute and three minutes.

6. Method according to one of claims 1 to 5, **characterised in that** in said step (10-100) said starting is prevented for a second selected duration.

7. Method according to claim 6, **characterised in that** in said step (10-100) said second duration ends when said warning device (DA) is deactivated.

8. Computer program product comprising a set of instructions which, when executed by processing means, is suitable for implementing the securing method according to one of the preceding claims in order to secure the starting of a vehicle (V) comprising a startable powertrain (GM), a communication module (MC) transmitting and receiving messages by wave, and an alert device (DA) generating, in the event of activation, at least one alert message intended to be transmitted by the said communication module (MC) to at least one predefined piece of communication equipment in the event of an attempted attack on and/or theft of the said vehicle (V).

9. Security device (DS) for a vehicle (V) comprising a startable powertrain (GM), a communication module (MC) transmitting and receiving messages by way of waves, and an alert device (DA) generating, in the event of activation, at least one alert message intended to be transmitted by the said communication module (MC) to at least one predefined piece of communication equipment in the event of an attempted attack on and/or theft of the said vehicle (V), **characterised in that** it comprises at least one processor (PR) and at least one memory (MD) arranged to perform the operations consisting, in the event of an attempt to start said powertrain (GM) while said warning device (DA) is activated, in determining whether it has been possible for said warning message to be transmitted, and if not, in preventing said start.

10. Vehicle (V) comprising a startable powertrain (GM), a communication module (MC) transmitting and receiving messages by way of waves, and an alert device (DA) generating, in the event of activation, at least one alert message intended to be transmitted by the said communication module (MC) to at least one predefined piece of communication equipment in the event of an attempted attack on and/or theft of the said vehicle (V), **characterised in that** it further comprises a securing device (DS) according to claim 9.
